# EUROPEAN PATENT APPLICATION

(11) **EP 4 601 258 A1**
(43) Date of publication of application: **13.08.2025**
(21) Application number: 23881281.2
(22) Date of filing: 28.06.2023
(51) Int. Cl.: H04L 45/247

(54) **DEVICE MANAGEMENT METHOD, AND DEVICES, SYSTEM AND STORAGE MEDIUM**

(30) Priority: 27.10.2022 CN 202211328073
(71) Applicant: Huawei Technologies Co., Ltd., Shenzhen, Guangdong 518129 (CN)
(72) Inventor: ZENG, Qiang, Shenzhen, Guangdong 518129 (CN); LI, Zeyu, Shenzhen, Guangdong 518129 (CN)
(74) Representative: MERH-IP Matias Erny Reichl Hoffmann Patentanwälte PartG mbB
(86) International application number: PCT/CN2023/103133
(87) International publication number: WO 2024/087692

(57) **Abstract**

This application relates to a device management method, a device, a system, and a storage medium. The method includes: A first device receives a network exception packet from a network edge device, where the network exception packet indicates that a network status of a first network is abnormal. In response to receiving the network exception packet, the first device switches to transmitting a backup packet to a second device via a second network. The second network is a transmission network whose network status is normal between the first device and the second device, and the backup packet includes a backup packet corresponding to a service packet transmitted in the first network when the first network is abnormal. According to embodiments of this application, millisecond-level network switching can be implemented for packet transmission without a need of waiting for a network response timeout, and duration of impact of a network exception on a service function is reduced.

## Description

This application claims priority to Chinese Patent Application No. 202211328073.4, filed with the China National Intellectual Property Administration on October 27, 2022 and entitled "DEVICE MANAGEMENT METHOD, DEVICE, SYSTEM, AND STORAGE MEDIUM", which is incorporated herein by reference in its entirety.

### TECHNICAL FIELD

This application relates to the field of communication technologies, and in particular, to a device management method, a device, a system, and a storage medium.

### BACKGROUND

A current redundancy system usually includes two data centers. Service data generated by a primary data center in the two data centers is replicated to the other data center. In this way, after the primary data center is faulty, the other data center can take over a service. However, two data centers in reality are usually dozens of kilometers away from each other, and the two data centers perform network connection through an optical cable. Due to external uncontrollable factors such as infrastructure construction, geological changes, and network reconstruction, a connection between the two data centers is unstable, and a network exception is likely to occur, affecting communication transmission between the two data centers and further affecting an upper-layer service function. Therefore, it needs to discover and isolate an abnormal network in a timely manner to ensure service stability.

In a related technology, the network exception is mainly detected by using a probe packet or by collecting statistics on indicators such as a delay and a packet loss rate of an abnormal packet and based on a relationship between a statistical result and a statistical threshold. However, because a communication network between the two data centers usually passes through a large quantity of network devices (such as a switch and a wavelength division multiplexer), to avoid unnecessary network switching triggered by misjudgment, the statistical threshold is usually large. This causes, to some extent, insufficient accuracy of network exception detection, long detection time, and long duration of impact on the service function.

### SUMMARY

In view of this, a device management method, a device, a system, and a storage medium are provided.

According to a first aspect, an embodiment of this application provides a device management method. A first device and a second device perform transmission of a service packet via a first network, the first network includes a network edge device connected to the first device, and the method includes: The first device receives a network exception packet from the network edge device, where the network exception packet indicates that a network status of the first network is abnormal. In response to receiving the network exception packet, the first device switches to transmitting a backup packet to the second device via a second network. The second network is a transmission network whose network status is normal between the first device and the second device, and the backup packet includes a backup packet corresponding to a service packet transmitted in the first network when the first network is abnormal.

In this embodiment of this application, the network edge device can quickly perform high-accuracy detection on the network status of the first network, and report, to the first device, the network exception packet indicating that the network status is abnormal. In response to the network exception packet provided by the network edge device, the first device may quickly switch to sending the backup packet to the second device via the second network whose network status is normal. In this way, millisecond-level network switching can be implemented for packet transmission without a need of waiting for a network response timeout, and duration of impact of a network exception on a service function is reduced.

Optionally, the first device and the second device are storage devices, and the first network is an optical transmission network.

According to the first aspect, in a first possible implementation of the device management method, the method further includes: In response to detecting that the network status of the first network is abnormal, the network edge device sends the network exception packet to the first device.

According to this embodiment of this application, the network edge device directly sends the network exception packet to the first device, so that duration of network exception detection can be shortened, and a speed of abnormal network switching can be improved.

According to the first possible implementation of the first aspect, the in response to detecting that the network status of the first network is abnormal, sending the network exception packet to the first device includes: The network edge device periodically performs detection on a preset indicator of the first network, to obtain a detection result corresponding to the preset indicator, where the preset indicator includes at least one of the following: port power, signal strength, a bit error rate, a delay, and a packet loss rate. In response to detecting that the detection result corresponding to the preset indicator reaches a preset threshold, the network edge device determines that the network status of the first network is abnormal, and sends the network exception packet to the first device.

According to this embodiment of this application, a hardware sensing capability of the network edge device for the network status can be used, to improve accuracy and a speed of network status detection.

According to the first aspect, in a second possible implementation of the device management method, a unique sequence number is added to each packet, the second device is configured to: check, based on the sequence number, whether the packet is valid, and store a valid packet, and the in response to receiving the network exception packet, switching to transmitting a backup packet to the second device via a second network includes: In response to receiving the network exception packet, the first device suspends transmission of the service packet via the first network, and notifies, via the second network, the second device that a sequence number of the service packet transmitted in the first network is invalid. The first device adds a valid sequence number to a backup packet, and sends, to the second device via the second network, the backup packet to which the valid sequence number is added.

According to this embodiment of this application, the first device suspends transmission of the service packet via the first network, to implement isolation and degradation of the first network, and ensure that a subsequent backup packet or service packet is no longer sent via the abnormal first network. In addition, after notifying the second device of the invalid sequence number, the first device may switch to sending the backup packet via the second network, so that the packet is resent without a need of waiting for a network timeout; and the second device may directly ignore, based on the notification of the invalid sequence number, the invalid service packet transmitted via the first network, to avoid repeatedly storing a same packet, maintain data consistency, and reduce duration of impact of a network exception on a service function.

According to the first aspect, in a third possible implementation of the device management method, before transmission of the service packet is performed via the first network, the method further includes: The first device determines network information corresponding to the first network, where the network information includes a device identifier of a device included in the first network. The network exception packet sent by the network edge device to the first device includes a first device identifier of the network edge device. The in response to receiving the network exception packet, suspending transmission of the service packet via the first network includes: The first device determines, based on the first device identifier in the network exception packet and the network information, the first network including the network edge device, and deletes, from a routing table of the first device, routing information corresponding to the first network that passes through the network edge device.

According to this embodiment of this application, the first network including the network edge device can be quickly determined based on the first device identifier in the network exception packet and the network information, and the network information corresponding to the first network is deleted from the routing table, so that quick network isolation can be implemented, and impact of a network exception on a service is reduced.

According to the first aspect or the third possible implementation of the first aspect, the second device is further configured to send a probe packet to the network edge device via the first network, and the method further includes: In response to receiving the probe packet, the network edge device fills the first device identifier of the network edge device in the probe packet, and sends a probe packet filled with the first device identifier to the first device. The determining network information corresponding to the first network includes: In response to receiving the probe packet filled with the first device identifier, the first device extracts the first device identifier from the probe packet filled with the first device identifier, and records the extracted first device identifier in the network information.

According to this embodiment of this application, the first device identifier of the network edge device is recorded, so that the network edge device through which the currently used first network passes can be learned of, and an abnormal network can be quickly determined based on the first device identifier, to implement quick network isolation.

According to the first aspect or the third possible implementation of the first aspect, when the first device and the network edge device are connected to a same network device, the determining network information corresponding to the first network includes: The first device obtains a second device identifier of the network device, and records the second device identifier in the network information. The network exception packet sent by the network edge device to the first device includes the first device identifier of the network edge device and the second device identifier of the network device. The in response to receiving the network exception packet, suspending transmission of the service packet via the first network includes: The first device determines, based on the first device identifier and the second device identifier in the network exception packet and the network information, the first network that passes through the network edge device and the network device, and delete, from the routing table of the first device, routing information corresponding to the first network that passes through the network edge device and the network device.

According to this embodiment of this application, the first network including the network edge device and the network device can be determined more quickly and accurately based on the first device identifier and the second device identifier in the network exception packet and the network information, and the network information corresponding to the first network is deleted from the routing table, so that quick network isolation can be implemented, and impact of a network exception on a service is reduced.

According to the first aspect, in a fourth possible implementation of the device management method, when the network status of the first network is normal, a process of transmission of the service packet between the first device and the second device includes: The first device obtains a to-be-transmitted service packet, backs up the to-be-transmitted service packet to obtain a backup packet, stores the backup packet, adds a sequence number to the to-be-transmitted service packet, and sends, to the second device via the first network, a service packet to which the sequence number is added.

According to this embodiment of this application, the service packet is backed up to obtain the backup packet, so that when a network is abnormal, another normal network can be directly used to attempt to send the backup packet without a need of waiting for a network response timeout, and a replication service between two storage devices can still be maintained. In addition, the sequence number is added to the service packet, to ensure data consistency of the replication service.

According to the first aspect, in a fifth possible implementation of the device management method, the method further includes: The network edge device predicts, based on a historical network exception packet of the first network, a time point at which a network exception occurs in the first network in the future, where the historical network exception packet includes a network exception packet obtained through statistics collection when a network exception occurs in the first network within historical time. The network edge device sends the network exception packet to the first device based on the time point.

According to this embodiment of this application, based on the predicted time point at which the network exception may occur in the future, duration for performing detection on the network status of the first network by the network edge device can be shortened, and the network exception packet can be sent to the first device in advance, so that the impact of the network exception on the service function is significantly reduced.

According to the first aspect, in a sixth possible implementation of the device management method, the first device and the network edge device perform packet transmission via an internal network, a network status detection module is disposed in the internal network, the network status detection module is configured to perform detection on a network status of the internal network, and the method further includes: In response to detecting that the network status of the internal network is abnormal, the network status detection module sends an internal network exception packet to the first device. In response to the internal network exception packet, the first device switches to performing packet transmission with the network edge device via a backup internal network.

According to this embodiment of this application, when the network status detection module detects that the internal network is abnormal, switching to performing packet transmission with the network edge device via the backup internal network is performed. This improves a redundancy capability inside the first data center, saves duration of waiting for a network timeout, ensures data consistency, and reduces impact of an internal network exception on a service.

According to a second aspect, an embodiment of this application provides a device. The device is used as a first device, the first device and a second device perform transmission of a service packet via a first network, the first network includes a network edge device connected to the first device, and the first device includes a receiving unit and a switching unit. The receiving unit is configured to receive a network exception packet from the network edge device, where the network exception packet indicates that a network status of the first network is abnormal. The switching unit is configured to: in response to receiving the network exception packet, switch to transmitting a backup packet to the second device via a second network. The second network is a transmission network whose network status is normal between the first device and the second device, and the backup packet includes a backup packet corresponding to a service packet transmitted in the first network when the first network is abnormal.

Optionally, the first device and the second device are storage devices, and the first network is an optical transmission network.

According to the second aspect, in a first possible implementation of the device, the network edge device is configured to: in response to detecting that the network status of the first network is abnormal, send the network exception packet to the first device.

According to the first possible implementation of the second aspect, in response to detecting that the network status of the first network is abnormal, sending the network exception packet to the first device includes: periodically performing detection on a preset indicator of the first network, to obtain a detection result corresponding to the preset indicator, where the preset indicator includes at least one of the following: port power, signal strength, a bit error rate, a delay, and a packet loss rate; and in response to detecting that the detection result corresponding to the preset indicator reaches a preset threshold, determining that the network status of the first network is abnormal, and sending the network exception packet to the first device.

According to the second aspect, in a second possible implementation of the device, a unique sequence number is added to each packet, the second device is configured to: check, based on the sequence number, whether the packet is valid, and store a valid packet. The switching unit includes: an exception response module, configured to: in response to receiving the network exception packet, suspend transmission of the service packet via the first network, and notify, via the second network, the second device that a sequence number of the service packet transmitted in the first network is invalid; and a packet sending module, configured to: add a valid sequence number to a backup packet, and send, to the second device via the second network, the backup packet to which the valid sequence number is added.

According to the second aspect, in a third possible implementation of the device, the first device further includes: an information determining unit, configured to: before transmission of the service packet is performed via the first network, determine network information corresponding to the first network, where the network information includes a device identifier of a device included in the first network. The network exception packet sent by the network edge device to the first device includes a first device identifier of the network edge device. In response to receiving the network exception packet, suspending transmission of the service packet via the first network includes: determining, based on the first device identifier in the network exception packet and the network information, the first network including the network edge device, and deleting, from a routing table of the first device, routing information corresponding to the first network that passes through the network edge device.

According to the second aspect or the third possible implementation of the second aspect, the second device is further configured to send a probe packet to the network edge device via the first network. The network edge device is further configured to: in response to receiving the probe packet, fill the first device identifier of the network edge device in the probe packet, and send a probe packet filled with the first device identifier to the first device. The information determining unit includes: a first recording module, configured to: in response to receiving the probe packet filled with the first device identifier, extract the first device identifier from the probe packet filled with the first device identifier, and record the extracted first device identifier in the network information.

According to the second aspect or the third possible implementation of the second aspect, when the first device and the network edge device are connected to a same network device, the information determining unit includes: a second recording module, configured to obtain a second device identifier of the network device, and record the second device identifier in the network information. The network exception packet sent by the network edge device to the first device includes the first device identifier of the network edge device and the second device identifier of the network device. In response to receiving the network exception packet, suspending transmission of the service packet via the first network includes: determining, based on the first device identifier and the second device identifier in the network exception packet and the network information, the first network that passes through the network edge device and the network device, and deleting, from the routing table of the first device, routing information corresponding to the first network that passes through the network edge device and the network device.

According to the second aspect, in a fourth possible implementation of the device, the first device further includes: a packet transmission unit, configured to: when the network status of the first network is normal, obtain a to-be-transmitted service packet, back up the to-be-transmitted service packet to obtain a backup packet, store the backup packet, add a sequence number to the to-be-transmitted service packet, and send, to the second device via the first network, a service packet to which the sequence number is added.

According to the second aspect, in a fifth possible implementation of the device, the network edge device is further configured to: predict, based on a historical network exception packet of the first network, a time point at which a network exception occurs in the first network in the future, where the historical network exception packet includes a network exception packet obtained through statistics collection when a network exception occurs in the first network within historical time; and send the network exception packet to the first device based on the time point.

According to the second aspect, in a sixth possible implementation of the device, the first device and the network edge device perform packet transmission via an internal network, a network status detection module is disposed in the internal network, and the network status detection module is configured to: perform detection on a network status of the internal network, and in response to detecting that the network status of the internal network is abnormal, send an internal network exception packet to the first device. The first device further includes: an internal network switching unit, configured to: in response to the internal network exception packet, switch to performing packet transmission with the network edge device via a backup internal network.

According to a third aspect, an embodiment of this application provides a device. The device is used as a first device, the first device and a second device perform transmission of a service packet via a first network, the first network includes a network edge device connected to the first device, the first device includes an interface and a processor, and the interface communicates with the processor. The processor is configured to: receive a network exception packet from the network edge device, where the network exception packet indicates that a network status of the first network is abnormal; and in response to receiving the network exception packet, switch to transmitting a backup packet to the second device via a second network. The second network is a transmission network whose network status is normal between the first device and the second device, and the backup packet includes a backup packet corresponding to a service packet transmitted in the first network when the first network is abnormal.

Optionally, the first device and the second device are storage devices, and the first network is an optical transmission network.

According to the third aspect, in a first possible implementation of the device, the network edge device is configured to: in response to detecting that the network status of the first network is abnormal, send the network exception packet to the first device.

According to the first possible implementation of the third aspect, in response to detecting that the network status of the first network is abnormal, sending the network exception packet to the first device includes: periodically performing detection on a preset indicator of the first network, to obtain a detection result corresponding to the preset indicator, where the preset indicator includes at least one of the following: port power, signal strength, a bit error rate, a delay, and a packet loss rate; and in response to detecting that the detection result corresponding to the preset indicator reaches a preset threshold, determining that the network status of the first network is abnormal, and sending the network exception packet to the first device.

According to the third aspect, in a second possible implementation of the device, a unique sequence number is added to each packet, the second device is configured to: check, based on the sequence number, whether the packet is valid, and store a valid packet, and in response to receiving the network exception packet, switching to transmitting the backup packet to the second device via the second network includes: in response to receiving the network exception packet, suspending transmission of the service packet via the first network, and notifying, via the second network, the second device that a sequence number of the service packet transmitted in the first network is invalid; and adding a valid sequence number to a backup packet, and sending, to the second device via the second network, the backup packet to which the valid sequence number is added.

According to the third aspect, in a third possible implementation of the device, the processor is further configured to: before transmission of the service packet is performed via the first network, determine network information corresponding to the first network, where the network information includes a device identifier of a device included in the first network. The network exception packet sent by the network edge device to the first device includes a first device identifier of the network edge device. In response to receiving the network exception packet, suspending transmission of the service packet via the first network includes: determining, based on the first device identifier in the network exception packet and the network information, the first network including the network edge device, and deleting, from a routing table of the first device, routing information corresponding to the first network that passes through the network edge device.

According to the third aspect or the third possible implementation of the third aspect, the second device is further configured to send a probe packet to the network edge device via the first network. The network edge device is further configured to: in response to receiving the probe packet, fill the first device identifier of the network edge device in the probe packet, and send a probe packet filled with the first device identifier to the first device. Determining the network information corresponding to the first network includes: in response to receiving the probe packet filled with the first device identifier, extracting the first device identifier from the probe packet filled with the first device identifier, and recording the extracted first device identifier in the network information.

According to the third aspect or the third possible implementation of the third aspect, when the first device and the network edge device are connected to a same network device, determining the network information corresponding to the first network includes: obtaining a second device identifier of the network device, and recording the second device identifier in the network information. The network exception packet sent by the network edge device to the first device includes the first device identifier of the network edge device and the second device identifier of the network device. In response to receiving the network exception packet, suspending transmission of the service packet via the first network includes: determining, based on the first device identifier and the second device identifier in the network exception packet and the network information, the first network that passes through the network edge device and the network device, and deleting, from the routing table of the first device, routing information corresponding to the first network that passes through the network edge device and the network device.

According to the third aspect, in a fourth possible implementation of the device, the processor is further configured to: when the network status of the first network is normal, obtain a to-be-transmitted service packet, back up the to-be-transmitted service packet to obtain a backup packet, store the backup packet, add a sequence number to the to-be-transmitted service packet, and send, to the second device via the first network, a service packet to which the sequence number is added.

According to the third aspect, in a fifth possible implementation of the device, the network edge device is further configured to: predict, based on a historical network exception packet of the first network, a time point at which a network exception occurs in the first network in the future, where the historical network exception packet includes a network exception packet obtained through statistics collection when a network exception occurs in the first network within historical time; and send the network exception packet to the first device based on the time point.

According to the third aspect, in a sixth possible implementation of the device, the first device and the network edge device perform packet transmission via an internal network, a network status detection module is disposed in the internal network, and the network status detection module is configured to: perform detection on a network status of the internal network, and in response to detecting that the network status of the internal network is abnormal, send an internal network exception packet to the first device. The processor is further configured to: in response to the internal network exception packet, switch to performing packet transmission with the network edge device via a backup internal network.

According to a fourth aspect, an embodiment of this application provides a device management system. The device management system includes a first device and a network edge device. The first device is configured to perform an operation performed by the first device in the foregoing device management method. The network edge device is configured to perform an operation performed by the network edge device in the foregoing device management method.

According to a fifth aspect, an embodiment of this application provides a non-volatile computer-readable storage medium. The non-volatile computer-readable storage medium stores computer program instructions. When the computer program instructions are executed by a processor, the device management method in one or more of the first aspect or the plurality of possible implementations of the first aspect is implemented.

According to a sixth aspect, an embodiment of this application provides a computer program product. The computer program product includes computer-readable code or a non-volatile computer-readable storage medium carrying the computer-readable code. When the computer-readable code is run in an electronic device, the processor of the electronic device performs the device management method in one or more of the first aspect or the plurality of possible implementations of the first aspect.

These aspects and other aspects of this application are more concise and more comprehensible in descriptions of the following (a plurality of) embodiments.

### BRIEF DESCRIPTION OF DRAWINGS

Together with this specification, accompanying drawings included in this specification as a part of this specification show example embodiments, features, and aspects of this application, and are for describing principles of this application.
FIG. 1 is a diagram of a redundancy system based on a related technology;
FIG. 2 is a diagram of a redundancy system according to an embodiment of this application;
FIG. 3 is a diagram of a packet transmission process according to an embodiment of this application;
FIG. 4 is a flowchart of a device management method according to an embodiment of this application;
FIG. 5 is a diagram of a device registration and network exception reporting process according to an embodiment of this application;
FIG. 6 is a diagram of a redundancy system according to an embodiment of this application;
FIG. 7 is a diagram of a network switching process according to an embodiment of this application;
FIG. 8 is a diagram of a network information determining process according to an embodiment of this application;
FIG. 9 is a diagram of a structure of a first device according to an embodiment of this application; and
FIG. 10 is a diagram of a structure of an electronic device 1300 according to an embodiment of this application.

### DESCRIPTION OF EMBODIMENTS

The following describes various example embodiments, features, and aspects of this application in detail with reference to accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described herein as "example" is not necessarily explained as being superior to or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

For better understanding of solutions in embodiments of this application, the following first describes related terms and concepts that may be used in embodiments of this application.
(1) A network is a communication network constructed by using a fiber channel (FC), an internet protocol (IP), a remote direct memory access (RDMA) protocol, and the like. Data may be replicated between two storage devices in two data centers via the network, so that the two storage devices have a same data copy.
(2) A link is a logical link (or referred to as a logical channel or the like) that is established based on a network and that is between a network interface card port of a storage device in a data center (DC) and a network interface card port of a storage device in another data center, and the link may specifically implement packet transmission during data replication between the two storage devices.
(3) Active-active means that service data produced by a host is written to storage devices in two data centers at the same time. If a storage device in one data center is faulty, a storage device in the other data center automatically takes over a service immediately. In this way, no data is lost and the service is not interrupted when the device is faulty.
(3) Synchronous replication means that service data produced by a host is written to storage devices in two data centers at the same time. If a primary storage device in a primary data center is faulty, a user may manually configure a redundancy storage device in a redundancy data center to take over a service. In this way, when the device is faulty, no data is lost and the service is recovered within minutes.
(3) Asynchronous replication means that service data produced by a host is written only to a primary storage device in a primary data center. The service data of the primary storage device is periodically synchronized by a background to a redundancy storage device in a redundancy data center or it is triggered to manually synchronize the service data of the primary storage device to a redundancy storage device in a redundancy data center. In this way, when the primary storage device is faulty, the redundancy storage device has the latest complete data.
(4) Network exception detection means that a storage device periodically performs detection on indicators such as a bit error rate, a delay, and a packet loss rate of a network status. When an indicator exceeds a corresponding threshold, it is determined that a network is in an abnormal state (in other words, in a subhealthy state).
(5) Network isolation means that there are usually a plurality of networks that can be for packet transmission between two storage devices. When a network status of one of the networks is abnormal, the storage devices no longer perform packet transmission via the abnormal network, and switch to performing packet transmission via a network whose status is normal.
(6) A network device is a hardware device that connects nodes such as servers, computers, and application terminals to form an information communication network. Common network devices include a switch, a router, a firewall, a bridge, a hub, a gateway, a network interface controller (Network Interface Controller, NIC, also referred to as a network interface card), an optical fiber transceiver, and the like.
(7) A network edge device is a network device located between an intranet (namely, an internal network) and an external network (namely, a public network), or a network device connecting the intranet and the external network, and usually includes a switch, a wavelength division multiplexer, a network interface card, and the like.

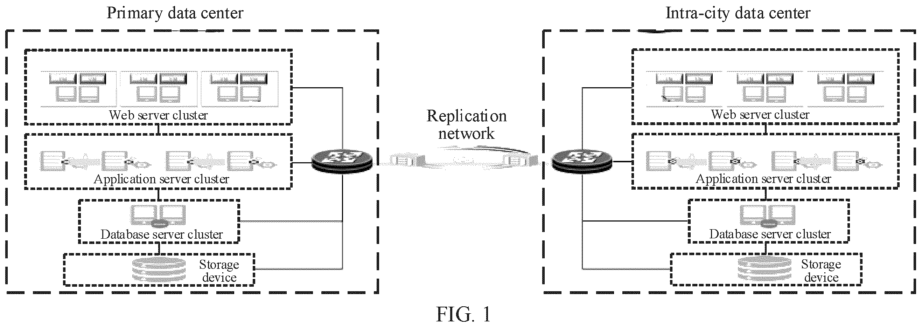

As described above, a current redundancy system usually includes two data centers. Service data generated by a primary data center in the two data centers is replicated to the other data center. In this way, after the primary data center is faulty, the other data center can take over a service. However, two data centers in reality are usually dozens of kilometers away from each other, and usually perform network connection by leasing an optical cable from a carrier. Due to external uncontrollable factors such as infrastructure construction, geological changes, and network reconstruction, a connection between the two data centers is unstable, and a network exception is likely to occur, affecting communication transmission between the two data centers and further affecting an upper-layer service function. Therefore, it needs to discover and isolate an abnormal network in a timely manner to ensure service stability. FIG. 1 is a diagram of a redundancy system based on a related technology. As shown in FIG. 1, a primary data center and an intra-city data center each include a web server cluster, an application server cluster, a database server cluster, and a storage device. The web server cluster, the application server cluster, and the database server cluster may be understood as host clusters that produce service data. The host clusters send the produced service data to the storage devices for storage. Data replication may be performed between the storage devices in the two data centers via a replication network.

Based on the redundancy system shown in FIG. 1, a network exception detection manner in the related technology mainly includes two types. A first type is that the storage device in the two data centers periodically actively sends a probe packet to a peer end and collect statistics on indicators such as a delay and a packet loss rate of the probe packet in a specific periodicity. When these indicators reach specific indicator thresholds, a network exception is reported and network isolation is needed. A second type is that the storage devices in the two data centers each collect statistics on indicators such as a delay and a packet loss rate of a service packet in a network. When these indicators reach specific indicator thresholds, a network exception is reported and network isolation is needed.

However, the network exception detection manner in the related technology depends on indicator statistics collection performed by the two storage devices on the probe packet or an abnormal service packet. However, during transmission in the replication network, a packet usually passes through network devices such as an interface card, a switch, and a wavelength division multiplexer. To avoid unnecessary network switching triggered by misjudgment, currently, statistics collection is usually performed on a delay, a packet loss rate, and the like in a specific periodicity, and only when a statistical result reaches a threshold corresponding to each indicator, it can be determined that the network is abnormal and network isolation needs to be performed. In addition, a current statistical periodicity is usually at a minute level, and the indicator threshold is an empirical analysis value of historical data. Consequently, in network exception detection, minute-level duration is needed to detect an abnormal network. In addition, for some abnormal networks, due to a factor like service pressure, indicators obtained through statistics collection such as a delay and a packet loss rate may not reach indicator thresholds and the abnormal network fails to be detected. However, the abnormal network may have affected a replication service. In short, in the network exception detection manner in the related technology, detection time is long and accuracy is low.

Based on the redundancy system shown in FIG. 1, a network isolation manner in the related technology is mainly to trigger network isolation after a storage device detects that a network is abnormal. Specifically, for a service packet that does not enter the replication network, a network whose network status is normal is preferentially selected in subsequent sending. For example, after the network is detected to be abnormal, a routing table of networks may be updated, and the network whose status is normal is preferentially selected. For a service packet that has entered the replication network for transmission, after a network timeout, network switching is performed for retry.

For the service packet that has been transmitted in the replication network, because the storage device does not know a specific sending status of the service packet, the storage device can only rely on a timeout mechanism of a network protocol, and resends the service packet after a network timeout is reported. However, in the timeout mechanism, a time unit for calculating a timeout is usually 10 seconds, and consequently, time needed for performing network switching to re-send a service packet during network isolation processing is long. Especially in a database scenario, if a service packet of database log data is transmitted, because a database needs to first respond to a returned log indicating that transmission of the packet succeeds, and then process a data consistency task, if a log indicating that transmission of a service packet succeeds is not returned for long time, another subsequent service packet cannot be processed in a timely manner.

In conclusion, in the current network exception detection manner and network isolation manner, after a network is abnormal, minute-level time is needed to eliminate impact of the abnormal network on a user service. However, in a service scenario with a high performance requirement, impact of a network exception on a service is usually needed to be less than several seconds. Therefore, it is critical to study how to quickly detect and isolate the abnormal network.

In view of this, embodiments of this application provide a device management method. In the device management method in embodiments of this application, a network edge device connected to a storage device senses a network status. For example, the network edge device may perform chip-level monitoring on port power, signal strength, a bit error rate, a packet loss rate, and the like, and when a network is abnormal, immediately report a network exception packet to the storage device in a data center. The device that reports the network fault may be a network edge device like a switch or a wavelength division multiplexer. After receiving the network exception packet reported by the network edge device, the storage device may immediately isolate (in other words, degrade) the abnormal network, so that a subsequent service packet is no longer sent via the abnormal network; notify a storage device in another data center of a sequence number of an invalid service packet via a backup network whose network status is normal, where the invalid service packet includes a packet that is being transmitted in the abnormal network when the network is abnormal; and immediately perform network switching for retry by using a backup packet corresponding to the invalid service packet, in other words, switch to sending the backup packet to the storage device in the another data center via the backup network. This saves duration of waiting for a network timeout, ensures data consistency, and reduces impact of a network exception on a service.

In the device management method in embodiments of this application, the network edge device can detect the network exception at a hardware level. The network edge device bypasses an intermediate network device and directly sends the network exception packet to the storage device. The storage device can quickly isolate the abnormal network, and immediately perform, by using the backup packet, network switching for retry on the service packet transmitted in the abnormal network.

Duration of impact on a service in the device management method in embodiments of this application=duration for performing detection on the network status by the network edge device+duration for performing, by the storage device, network switching for retry, and the duration of the impact is only at a millisecond level. However, duration of impact on a service in the related technology=duration of network exception detection+duration of abnormal network switching+duration of an abnormal network response timeout, and the duration of the impact is at a minute level. Apparently, according to the device management method in this application, duration of waiting for a network timeout is saved, and impact of a network exception on a service is reduced.

The device management method in embodiments of this application may be applied to various replication services between two data centers in various redundancy systems, where the replication services include but are not limited to active-active, synchronous replication, asynchronous replication, and the like; and specifically, may be applied to a redundancy scenario in which an occasional network exception occurs in a transmission network between data centers or a service has a high requirement on network performance stability, so that a network exception can be quickly detected, millisecond-level network switching is implemented without a need of waiting for a network response timeout, and impact of the network exception on a service function is reduced.

In embodiments of this application, a party that initiates cross-device data transmission and sends data may be referred to as a source (source) end, and a party that receives the data may be referred to as a sink (sink) end. It should be noted that a device serving as a source end in a pair may be a sink end in another pair. In other words, a device may serve as a source end of a device, and may also be a sink end of another device.

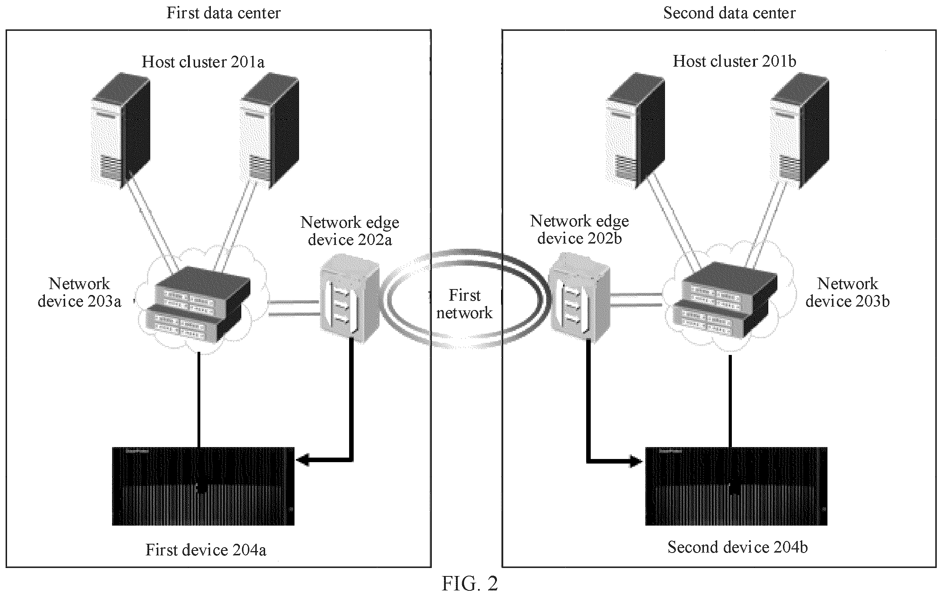

FIG. 2 is a diagram of a redundancy system according to an embodiment of this application. The following describes the device management method in embodiments of this application by using the redundancy system shown in FIG. 2. As shown in FIG. 2, the redundancy system includes a first data center and a second data center. The first data center includes a host cluster 201a, a network edge device 202a, a network device (for example, a switch) 203a, and a first device 204a. The second data center includes a host cluster 201b, a network edge device 202b, a network device 203b, and a second device 204b. An active-active data replication service exists between the first device 204a and the second device 204b. The first device 204a and the second device 204b may be storage devices, or certainly may be any electronic devices such as computing devices (for example, computer clusters). This is not limited in this embodiment of this application.

The host clusters 201a and 201b are respectively configured to produce service data, and transmit the service data to the first device 204a and the second device 204b through the network devices 203a and 203b respectively to store the service data. A device (the first device 204a or the second device 204b) serving as a source end may transmit the service data in a form of a service packet to a device at a sink end via a first network, in other words, the first device 204a in the first data center and the second device 204b in the second data center perform transmission of the service packet via the first network, to implement the replication service. The first network may be an optical transmission network, or certainly may be an electrical transmission network. This is not limited in this embodiment of this application.

The first network includes the network edge device 202a connected to the first device 204a and the network edge device 202b connected to the second device 204b. In a possible implementation, there may be the following two communication manners between the first device 204a and the network edge device 202a: The first device is connected to the network edge device via an internal network through the network device (for example, the switch), to perform bidirectional transmission of the service packet. The first device is directly connected to the network edge device through a network cable, to directly receive a network exception packet reported by the network edge device. It should be understood that the second device 204b and the network edge device 202b may communicate with each other in the foregoing two communication manners.

Based on the redundancy system shown in FIG. 2, in a possible implementation, when a network status of the first network is normal, a process of transmission of the service packet between the first device 204a and the second device 204b includes: The first device 204a obtains a to-be-transmitted service packet, backs up the to-be-transmitted service packet to obtain a backup packet, stores the backup packet, adds a sequence number to the to-be-transmitted service packet, and sends, to the second device 204b via the first network, a service packet to which the sequence number is added. The service packet may be sent to the second device 204b through an available transmission link in the first network.

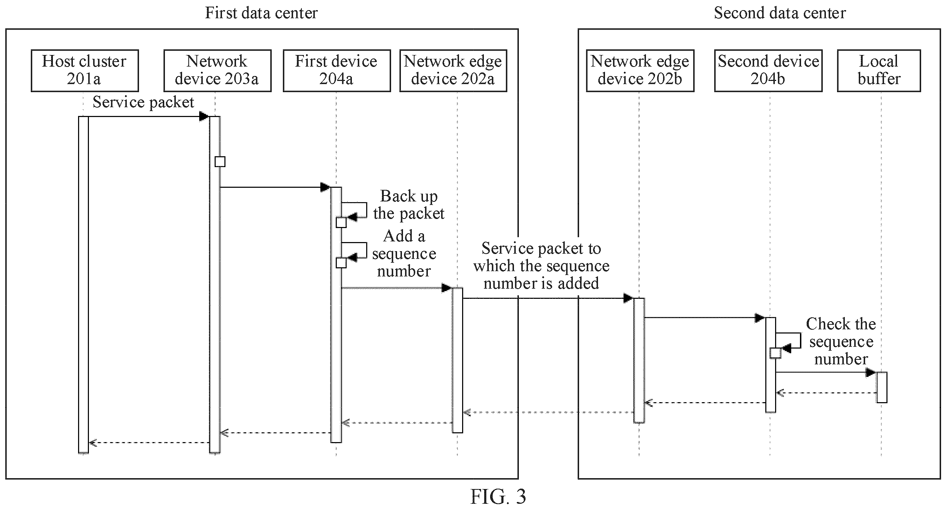

FIG. 3 is a diagram of a packet transmission process according to an embodiment of this application. As shown in FIG. 3, after a host cluster 201a sends a service packet to a first device 204a through a network device 203a, and the first device 204a backs up the service packet and adds a unique sequence number to the service packet, a service packet to which the sequence number is added is transmitted to a second device 204b through a network edge device 202a and a network edge device 202b in a second data center. The second device 204b checks the sequence number of the service packet, and locally buffers the service packet after the check succeeds, then, the buffered service packet may be parsed, to obtain and store service data obtained through parsing.

The host cluster 201a may convert service data into a service packet, and send the service packet to the first device 204a. In response to receiving the service packet sent by the host cluster 201a, the first device 204a backs up the service packet to obtain a backup packet. It should be understood that a service data conversion manner, a service packet backup manner, and the like are not limited in this embodiment of this application.

After receiving the service packet sent by the host cluster 201a, the first device 204a may further add a unique sequence number to the service packet, and send, to the second device 204b, a service packet to which the sequence number is added. In this way, after receiving the service packet to which the sequence number is added, the second device 204b may check, based on the sequence number, whether the service packet is valid and store a valid service packet, to ensure data consistency between the two storage devices.

According to this embodiment of this application, the service packet is backed up to obtain the backup packet, so that when a network is abnormal, another normal network can be directly used to send the backup packet without a need of waiting for a network response timeout. In this way, a replication service between the two storage devices can be maintained, and impact of a network exception on a service function can be reduced. In addition, the sequence number is added to the service packet, to ensure the data consistency between the two storage devices.

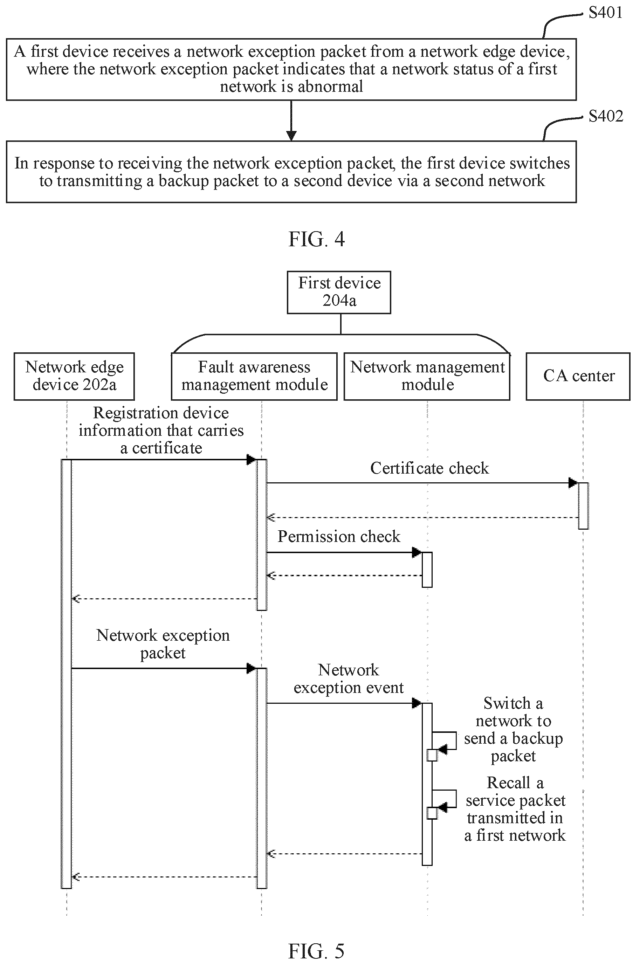

To facilitate understanding of an example implementation of the device management method in embodiments of this application, the following describes the device management method in embodiments of this application based on the redundancy system shown in FIG. 2 and by using a first data center as a main body. As shown in FIG. 4, the device management method includes the following steps.

Step S401: A first device 204a receives a network exception packet from a network edge device 202a, where the network exception packet indicates that a network status of a first network is abnormal.

The network edge device 202a may perform detection on preset indicators such as port power, signal strength, a bit error rate, and a packet loss rate (also referred to as a frame loss rate) that correspond to the first network (or a transmission link in the first network), in other words, the network edge device has a hardware sensing capability for the network status, and can sense more accurately the network status of the first network that passes through the network edge device. In this way, when detecting that the network status of the first network is abnormal, the network edge device can direct report the network exception packet to the first device 204a, to improve accuracy and a speed of network status detection, and reduce impact of a network exception on a service function.

It should be understood that, after receiving the network exception packet, the first device 204a may decode the network exception packet, to obtain readable information included in the network exception packet, for example, a first device identifier of the network edge device and a network exception type of the first network.

Optionally, the first device identifier of the network edge device 202a may be, for example, a world wide number (World Wide Number, WWN) of the network edge device 202a. The first device 204a may perform, based on the first device identifier in the network exception packet, security check and permission check on the network edge device that reports the network exception packet, to ensure that a source of the network exception packet is trustworthy. It should be understood that specific check manners of the security check and the permission check are not limited in this embodiment of this application. For example, a certificate authority (Certificate Authority, CA) may be used to check whether a certificate of the network edge device 204a corresponding to the first device identifier is within a validity period, to implement security check. In addition, whether the first device identifier is in a local authorization trustlist of the first device 204a may be further checked, to implement permission check and the like.

Before reporting the network exception packet to the first device 204a, the network edge device 202a may first perform device registration, to be allowed to report the network exception packet to the first device 204a. FIG. 5 is a diagram of a device registration and network exception reporting process according to an embodiment of this application. As shown in FIG. 5, a network edge device 202a may send registration device information to a first device 204a, where the registration device information carries a certificate and a first device identifier of the network edge device 202a. After receiving the device information, a fault awareness management module in the first device 204a may send the certificate in the device information to a CA center to check validity of the certificate. In addition, the fault awareness management module may send the first device identifier in the device information to a network management module of the first device 204a. The network management module may perform permission check on the network edge device 202a based on the first device identifier. After the certificate check and the permission check succeed, it is determined that the network edge device 202a performs registration successfully.

As shown in FIG. 5, when the network edge device 202a performs registration successfully, and the network edge device 202a detects that a network status of a first network is abnormal, the network edge device 202a may send a network exception packet to the first device 204a. After receiving the network exception packet, the fault awareness management module in the first device 204a extracts the first device identifier from the network exception packet, generates a network exception event representing that the first network is abnormal, and reports the network exception event to the network management module. After receiving the network exception event, the network management module performs an operation of switching the network to send a backup packet and recall a service packet transmitted in the first network, in other words, performs step S402 of switching to transmitting the backup packet to a second device 204b via a second network. Recalling the service packet transmitted in the first network can avoid a case in which a service packet that is the same as the backup packet is sent to the second device 204b, and helps maintain data consistency.

Step S402: In response to receiving the network exception packet, the first device 204a switches to transmitting a backup packet to a second device 204b via a second network. The second network is a transmission network whose network status is normal between the first device 204a and the second device 204b, and the backup packet includes a backup packet corresponding to a service packet transmitted in the first network when the first network is abnormal.

It should be understood that there are usually a plurality of networks that can be for packet transmission between the first device 204a and the second device 204b, to improve a redundancy capability of two data centers. If the network status of the first network between the first device 204a and the second device 204b is abnormal, the first device 204a may switch to using another transmission network whose network status is normal, in other words, switch to transmitting the backup packet to the second device 204b via the second network. The second network may also be referred to as a backup network, and a transmission link in the second network may be referred to as a backup link.

As described above, when the network status of the first network is normal, in a process of transmission of service packets between the first device 204a and the second device 204b, the first device 204a backs up to-be-transmitted service packets to obtain backup packets and stores the backup packets. After successfully receiving the service packets, the second device 204b usually feeds back a message indicating that the service packets are successfully received to the first device 204a, and the first device 204a can learn that the service packets have been successfully sent to the second device 204b, in other words, that service packets with those sequence numbers have been successfully replicated to the second device 204b.

In a process of packet transmission via the first network, if the network status of the first network suddenly becomes abnormal, a service packet that is being transmitted in the first network may fail to be transmitted to the second device 204b, or cannot be completely transmitted to the second device 204b. In this case, the first device 204a may directly switch to transmitting a backup packet to the second device 204b via the second network, in other words, may switch to transmitting the backup packet to the second device 204b through a transmission link in the second network. The backup packet may include a backup packet corresponding to the service packet transmitted in the first network when the first network is abnormal.

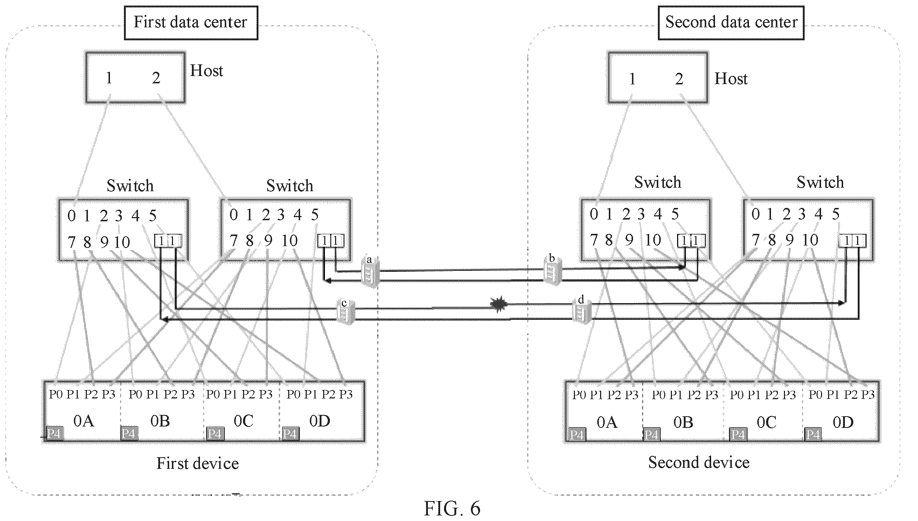

FIG. 6 is a diagram of a redundancy system according to an embodiment of this application. As shown in FIG. 6, 1 and 2 on hosts, 0 to 11 on switches, and P0 to P3 on storage devices "0A, 0B, 0C, 0D" all represent ports, and "a, b, c, and d" represent network edge devices, where connection lines between ports may represent specific transmission links in networks. In FIG. 6, there are two networks between a first data center and a second data center, including a network passing through network edge devices a and b and a network passing through network edge devices c and d. If the network edge device c detects that a network exception occurs in the network passing through the network edge devices c and d, the network passing through the network edge devices c and d may be a first network, and the network passing through the network edge devices a and b may be a second network, in other words, switching to transmitting a backup packet via the network passing through the network edge devices a and b may be performed. Correspondingly, if the network edge device a detects that a network exception occurs in the network passing through the network edge devices a and b, the network passing through the network edge devices a and b may be a first network, and the network passing through the network edge devices c and d may be a second network.

In this embodiment of this application, the network edge device can quickly perform high-accuracy detection on the network status of the first network, and report, to the first device, the network exception packet indicating that the network status is abnormal. In response to the network exception packet provided by the network edge device, the first device may quickly switch to sending the backup packet to the second device via the second network whose network status is normal. In this way, millisecond-level network switching can be implemented for packet transmission without a need of waiting for a network response timeout, and duration of impact of a network exception on a service function is reduced.

As described above, the network edge device 202a may perform detection on the network status of the first network, and send the network exception packet to the first device 204a when detecting that the network status of the first network is abnormal. In a possible implementation, before step S401, the method further includes:
In response to detecting that the network status of the first network is abnormal, the network edge device 202a sends the network exception packet to the first device 204a. In this manner, the network edge device directly sends the network exception packet to the first device, so that duration of network exception detection can be shortened, and a speed of abnormal network switching can be improved.

Optionally, in response to detecting that the network status of the first network is abnormal, sending the network exception packet to the first device includes: The network edge device 202a periodically performs detection on a preset indicator of the first network, to obtain a detection result corresponding to the preset indicator, where the preset indicator includes at least one of the following: port power, signal strength, a bit error rate, a delay, and a packet loss rate. In response to detecting that the detection result corresponding to the preset indicator reaches a preset threshold, the network edge device 202a determines that the network status of the first network is abnormal, and sends the network exception packet to the first device 204a.

Periodically performing detection on the preset indicator of the first network may be understood as performing detection on the preset indicator of the first network based on a specific periodicity, for example, performing periodic detection on the port power every two minutes. It should be understood that the network edge device 202a has a capability of performing detection on the preset indicator. A detection manner of the network edge device is not limited in this embodiment of this application.

The preset threshold may be an empirical value that is customized based on historical experience, and each preset indicator may correspond to a respective preset threshold. Optionally, if the network edge device 202a performs detection on only one preset indicator, the network edge device 202a may determine, when detecting that a detection result of the preset indicator reaches a preset threshold, that the network status of the first network is abnormal. If the network edge device 202a performs detection on a plurality of preset indicators, the network edge device 202a may determine, when detecting that detection results of the plurality of preset indicators all reach preset thresholds, that the network status of the first network is abnormal, or may determine, when detecting that a detection result of any preset indicator in the plurality of preset indicators reaches a preset threshold, that the network status of the first network is abnormal. This is not limited in this embodiment of this application.

Before sending the network exception packet to the first device 204a, the network edge device 202a may write the first device identifier of the network edge device 202a into the network exception packet, so that the first device 204a learns of a source of the network exception packet.

According to this embodiment of this application, a hardware sensing capability of the network edge device for the network status can be used, to improve accuracy and a speed of network status detection.

Considering that some detection duration still needs to be consumed when the network edge device 202a performs detection on the network status of the first network in real time, to further reduce the impact of the network exception on the service function, statistical analysis may be performed on some historical network exception packets, in other words, a rule of the first network being abnormal is analyzed. In this way, a time point at which a network exception may occur in the future may be predicted based on an analysis result, and a network exception packet is sent to the first device 204a in advance based on the predicted time point. In a possible implementation, the method further includes:
The network edge device 202a predicts, based on a historical network exception packet of the first network, a time point at which a network exception occurs in the first network in the future, where the historical network exception packet includes a network exception packet obtained through statistics collection when a network exception occurs in the first network within historical time.

The network edge device 202a sends the network exception packet to the first device 204a based on the time point.

For example, predicting, based on the historical network exception packet of the first network, the time point at which the network exception occurs in the first network in the future may be implemented by using a deep learning model, a machine learning model, or the like. Certainly, alternatively, the historical network exception packet of the first network may be modeled based on a statistical model, and the time point at which the network exception occurs in the first network in the future is predicted based on a constructed model. This is not limited in this embodiment of this application.

That the network edge device 202a sends the network exception packet to the first device 204a based on the time point may include: When current time reaches a time point before the time point, the network exception packet is sent to the first device 204a. For example, if the predicted time point is 7:00 on September 30, the network exception packet may be sent to the first device 204a when the current time is 6:59 on September 30. Certainly, the network exception packet may alternatively be sent to the first device 204a when current time reaches the time point. For example, if the predicted time point is 7:00 on September 30, the network exception packet may be sent to the first device 204a when the current time is 7:00 on September 30.

According to this embodiment of this application, based on the predicted time point at which the network exception may occur in the future, duration for performing detection on the network status of the first network by the network edge device can be shortened, and the network exception packet can be sent to the first device in advance, so that the impact of the network exception on the service function is significantly reduced.

As described above, a unique sequence number is added to the service packet sent by the first device 204a to the second device 204b, in other words, a unique sequence number is added to each packet. The second device 204b may be configured to: check, based on the sequence number, whether the packet is valid, and store a valid packet. In a possible implementation, in step S402, in response to receiving the network exception packet, switching to transmitting the backup packet to the second device via the second network includes:
Step S4021: In response to receiving the network exception packet, the first device 204a suspends transmission of the service packet via the first network, and notifies, via the second network, the second device 204b that a sequence number of the service packet transmitted in the first network is invalid.
Step S4022: The first device 204a adds a valid sequence number to a backup packet, and sends, to the second device via the second network, the backup packet to which the valid sequence number is added.

Optionally, in step S4021, suspending transmission of the service packet via the first network may include, for example: deleting routing information corresponding to the first network from a routing table of the first device, where the routing information may include, for example, information such as an IP address, a subnet mask, and a gateway of a network device in the first network. In this way, the first device 204a cannot perform packet transmission via the first network anymore, and network isolation (or referred to as degradation) of the first network is implemented.

Optionally, in step S4021, the second device 204b is notified, via the second network, that the sequence number of the service packet transmitted in the first network is invalid. For example, sequence numbers of service packets transmitted in the first network may be sent to the second device 204b, to notify the second device 204b that the service packets with the sequence numbers are invalid packets. Because sequence numbers of packets are usually in ascending order, a sequence number threshold greater than the sequence number of the service packet transmitted in the first network may be further sent to the second device 204b, to notify the second device 204b that a sequence number below the sequence number threshold is an invalid sequence number. In this way, the second device 204b may perform validity check based on the sequence number threshold.

It should be understood that, in step S4022, the sequence number added by the first device 204a to the backup packet should be different from the sequence number of the service packet transmitted in the first network, for example, may be a sequence number greater than the sequence number threshold, so that the second device 204b stores the backup packet based on the valid sequence number, and ignores a service packet with an invalid sequence number. In this way, when the second device 204b has stored the backup packet, and the service packet transmitted in the first network is transmitted again to the second device 204b after the network returns to normal, the second device 204b does not repeatedly store the service packet whose content is the same as that of the backup packet. This helps ensure the data consistency between the two storage devices.

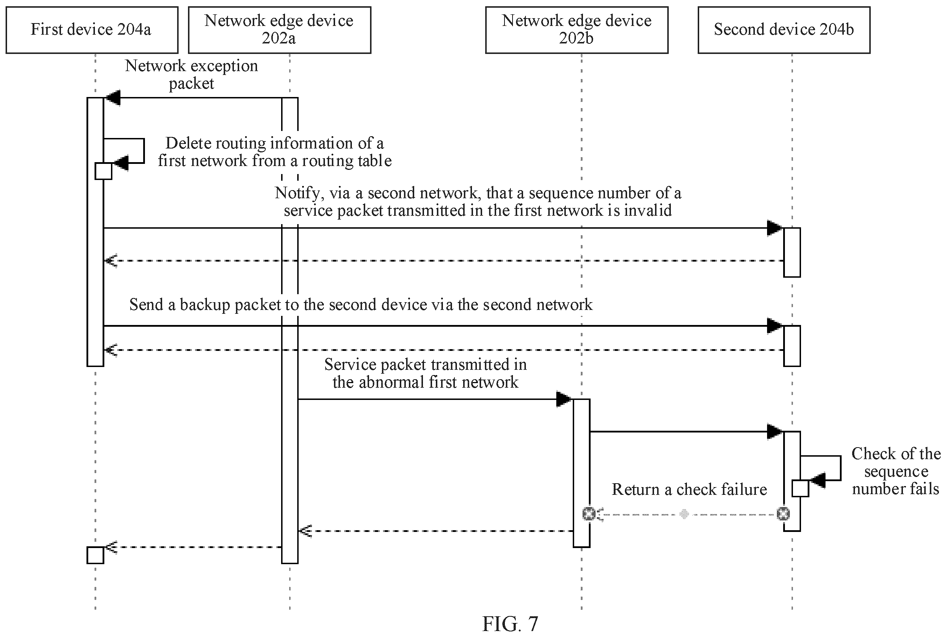

FIG. 7 is a diagram of a network switching process according to an embodiment of this application. As shown in FIG. 7, in response to detecting that a network status of a first network is abnormal, a network edge device 202a sends a network exception packet to a first device 204a. The first device 204a deletes, from a routing table based on a first device identifier in the network exception packet and network information, routing information corresponding to the first network that passes through the network edge device 202a. The first device 204a notifies, via a second network, a second device 204b that a sequence number of a service packet transmitted in the first network is invalid. The first device 204a sends, to the second device via the second network, a backup packet to which a valid sequence number is added. If the second device 204b receives a service packet transmitted in the abnormal first network, the second device 204b checks a sequence number of the service packet, and returns a check failure message to the first device 204a when the check of the sequence number fails, to ensure data consistency.

According to this embodiment of this application, the first device suspends transmission of the service packet via the first network, to implement isolation and degradation of the first network, and ensure that a subsequent backup packet or service packet is no longer sent via the abnormal first network. In addition, after notifying the second device of the invalid sequence number, the first device may switch to sending the backup packet via the second network, so that the packet is resent without a need of waiting for a network timeout; and the second device may directly ignore, based on the notification of the invalid sequence number, the invalid service packet transmitted via the first network, to avoid repeatedly storing a same packet, maintain data consistency, and reduce duration of impact of a network exception on a service function.

In a possible implementation, before performing transmission of the service packet via the first network, the method further includes:
The first device 204a sends a link establishment request to the second device 204b, where the link establishment request is for establishing a transmission link between the first device 204a and the second device 204b based on the first network, and the transmission link is for performing packet transmission between the first device 204a and the second device 204b. The first device 204a determines network information corresponding to the first network, where the network information includes a device identifier of a device included in the first network.
The first device 204a may send the link establishment request to the second device 204b via the first network. When the link establishment request passes through network devices (including the network edge device) in the first network, the network devices automatically allocate input-output (IO, Input-output) port numbers based on the link establishment request. In this way, the transmission link between the first device 204a and the second device 204b is established, to specifically perform packet transmission. It should be understood that a manner of establishing a link between two devices is not limited in this embodiment of this application.

Determining the network information corresponding to the first network may include, for example: in the foregoing transmission link establishment process, recording the first device identifier of the network edge device 202a connected to the first device 204a and in the first network, and/or recording a second device identifier of a network device 203a between the first device 204a and the network edge device 202a and in the first network.

According to this embodiment of this application, the network information corresponding to the first network is recorded, so that a network in which a network exception occurs can be quickly determined based on the network information, and the abnormal network can be isolated and degraded.

Considering that a storage device may not be directly connected to a network edge device, for example, in the redundancy system shown in FIG. 2, the first device 204a and the network edge device 204a are connected to the network device 203a, in a possible implementation, when the first device 204a and the network edge device 204a are connected to a same network device, determining the network information corresponding to the first network includes:
The first device 204a obtains a second device identifier of the network device, and records the second device identifier in the network information. In this manner, the second device identifier of the same network device between the first device and the network edge device can be effectively recorded, so that an abnormal network is subsequently determined based on the second device identifier.

As described above, the first device 204a establishes the transmission link by sending the link establishment request to the first network. After the link establishment request passes through the network device (for example, a switch) between the first device 204a and the network edge device 204a, the first device 204a may send a device identifier query request to the network device, to obtain the second device identifier of the network device, and then record, in the network information, the second device identifier obtained based on the query request. Alternatively, a user may manually find the second device identifier of the network device and import the second device identifier into the first device 204a, to record the second device identifier in the network information. This is not limited in this embodiment of this application.

In a possible implementation, when there are a plurality of network devices between the first device 204a and the network edge device 204a, the second device 204b is further configured to send a probe packet to the network edge device via the first network. Optionally, after the transmission link is established, the second device 204b may send the probe packet to the network edge device via the first network. The method further includes:
In response to receiving the probe packet, the network edge device 202a fills the first device identifier of the network edge device 202a in the probe packet, and sends a probe packet filled with the first device identifier to the first device 204a.

Determining the network information corresponding to the first network includes: In response to receiving the probe packet filled with the first device identifier, the first device 204a extracts the first device identifier from the probe packet filled with the first device identifier, and records the extracted first device identifier in the network information.

It should be understood that, in a scenario in which there are a plurality of network devices between the first device and the network edge device, a process of querying and recording the second device identifier of the network device may be complex. Therefore, only the first device identifier of the network edge device connected to the first device may be recorded. A manner of obtaining the first device identifier of the network edge device may be as follows: After the transmission link is successfully established, the two storage devices send probe packets to a peer end. After receiving a probe packet, a peer network edge device may fill a device identifier of the network edge device in the probe packet, and send a probe packet filled with the device identifier of the network edge device to a connected storage device, so that the storage device extracts the device identifier of the network edge device and stores the device identifier in network information.

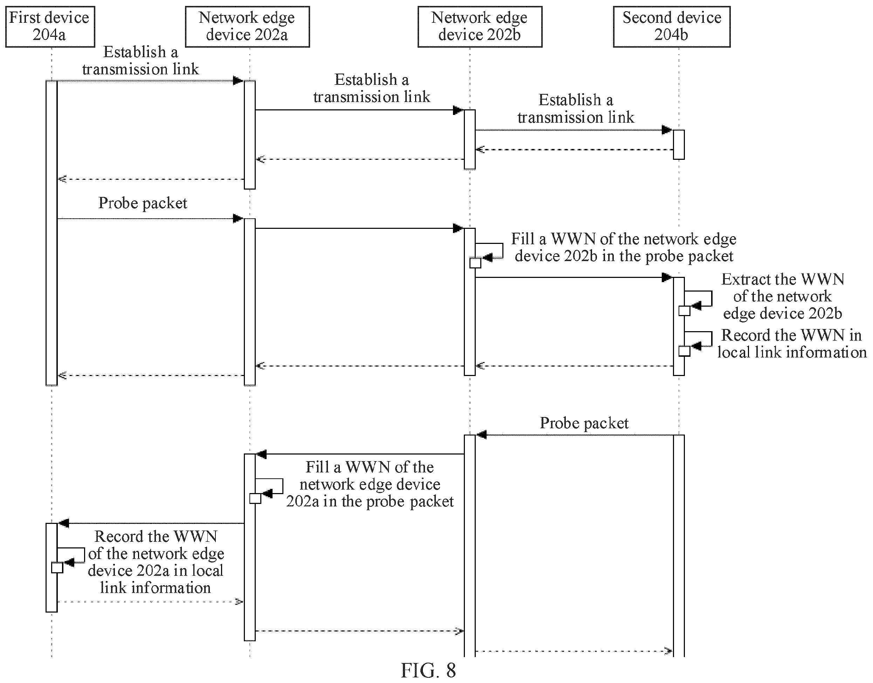

FIG. 8 is a diagram of a network information determining process according to an embodiment of this application. As shown in FIG. 8, a first device 204a in a first data center may send a link establishment request to a second device 204b in a second data center via a first network, to establish a transmission link between the first device 204a and the second device 204b. The transmission link passes through a network edge device 202a connected to the first device 204a and a network edge device 202b connected to the second device 204b. After the transmission link is established, the first device 204a may send a probe packet to the second device 204b, where the probe network is for probing a device identifier of the peer network edge device 202b. After receiving the probe packet, the network edge device 202b may fill a WWN of the network edge device 202b in the probe packet, and send a probe packet filled with the WWN to the second device 204b. The second device 204b may extract the WWN of the network edge device 202b from the probe packet, and record the WWN in local network information. Correspondingly, the second device 204b may send a probe packet to the first device 204a, where the probe network is for probing a device identifier of the peer network edge device 202a. After receiving the probe packet, the network edge device 202a may fill a WWN of the network edge device 202a in the probe packet, and send a probe packet filled with the WWN to the first device 204a. The first device 204a may extract the WWN of the network edge device 202a from the probe packet, and record the WWN in local network information.

According to this embodiment of this application, the first device identifier of the network edge device is recorded, so that the network edge device through which the currently used first network passes can be learned of, and an abnormal network can be quickly determined based on the first device identifier, to implement quick network isolation.

As described above, the network exception packet sent by the network edge device to the first device may include the first device identifier of the network edge device. Based on the network information, in step S4021, in response to receiving the network exception packet, suspending transmission of the service packet via the first network includes:
The first device 204a determines, based on the first device identifier in the network exception packet and the network information, the first network including the network edge device 202a, and deletes, from the routing table of the first device, the routing information corresponding to the first network that passes through the network edge device 202a.

As described above, the network information includes the device identifier of the device included in the first network, in other words, includes the first device identifier of the network edge device that passes through the first network. Therefore, the network information may be traversed based on the first device identifier in the network exception packet, to determine the first network including the network edge device 202a.

It should be understood that, after the routing information corresponding to the first network is deleted from the routing table of the first device, the routing information may include, for example, the information such as the IP address, the subnet mask, and the gateway of the network device in the first network. In this way, the first device 204a cannot perform packet transmission via the first network, and network isolation (or referred to as degradation) of the first network is implemented.

According to this embodiment of this application, the first network including the network edge device can be quickly determined based on the first device identifier in the network exception packet and the network information, and the routing information corresponding to the first network is deleted from the routing table, so that quick network isolation can be implemented, and impact of a network exception on a service is reduced.

As described above, the second device identifier of the same network device connected between the first device 204a and the network edge device 202a may be further recorded in the network information. In a possible implementation, the network exception packet sent by the network edge device 202a to the first device 204a includes the first device identifier of the network edge device 202a and the second device identifier of the network device. In step S4021, in response to receiving the network exception packet, suspending transmission of the service packet via the first network includes:
The first device 204a determines, based on the first device identifier and the second device identifier in the network exception packet and the network information, the first network that passes through the network edge device 202a and the network device, and deletes, from the routing table of the first device 204a, routing information corresponding to the first network that passes through the network edge device 202a and the network device.

As described above, the network information includes the device identifier of the device included in the first network, in other words, may include the first device identifier of the network edge device 202a that passes through the first network and the second device identifier of the network device that passes through the first network. Therefore, the network information may be traversed based on the first device identifier and the second device identifier in the network exception packet, to determine the first network including the network edge device 202a and the network device.

According to this embodiment of this application, the first network including the network edge device and the network device can be determined more quickly and accurately based on the first device identifier and the second device identifier in the network exception packet and the network information, and the network information corresponding to the first network is deleted from the routing table, so that quick network isolation can be implemented, and impact of a network exception on a service is reduced.

As described above, the first device 204a may be connected to the network edge device 202a via an internal network through a network device (for example, a switch). In other words, the first device 204a and the network edge device 202a may perform packet transmission via the internal network in the first data center. In a possible implementation, a network status detection module may be disposed in the internal network, and the network status detection module may be configured to perform detection on a network status of the internal network. The method further includes:
In response to detecting that the network status of the internal network is abnormal, the network status detection module sends an internal network exception packet to the first device 204a.
In response to the internal network exception packet, the first device 204a switches to performing packet transmission with the network edge device via a backup internal network.

The network status detection module may periodically perform detection on at least one preset indicator of port power, signal strength, a bit error rate, a delay, or a packet loss rate of the internal network, to implement status detection of the internal network. When detecting that the at least one preset indicator reaches a preset threshold, the network status detection module determines that the network status of the internal network is abnormal, and sends the internal network exception packet to the first device 204a.

It should be understood that there may be a plurality of internal networks between the first device and the network edge device, to improve a redundancy capability of the first data center. That in response to the internal network exception packet, the first device 204a switches to performing packet transmission with the network edge device via the backup internal network may include, for example: The first device 204a suspends transmission of the service packet via the internal network, and sends, to the network edge device 202a via the backup internal network, a notification indicating that a sequence number of a service packet transmitted in the internal network is invalid. After receiving the notification, the network edge device 202a forwards the notification to the second device 204b. In addition, the first device 204a sends, to the network edge device 202a via the backup internal network, a backup packet to which a valid sequence number is added, where the backup packet may be a backup packet corresponding to the service packet transmitted in the internal network when the network is abnormal. After receiving the backup packet, the network edge device 202a may forward the backup packet to the second device 204b. In this way, the second device 204b may check, based on the sequence number of the backup packet, whether the backup packet is valid, and effectively store the valid backup packet while ignoring the invalid service packet.

According to this embodiment of this application, when the network status detection module detects that the internal network in the first data center is abnormal, switching to performing packet transmission with the network edge device via the backup internal network is performed. This improves a redundancy capability inside the first data center, saves duration of waiting for a network timeout, ensures data consistency, and reduces impact of an internal network exception on a service.

It should be noted that the foregoing embodiments of this application are described by using the first data center as the main body. A person skilled in the art should understand that the device management method in embodiments of this application is also applicable to a second data center, in other words, for the second data center, refer to the specific implementations of the device management method in the foregoing embodiments of this application, to reduce impact of a network exception on a service of the second data center, and improve a redundancy capability of the second data center. In addition, the redundancy systems shown in FIG. 2 and FIG. 6 are some possible implementations provided in embodiments of this application, and do not represent all implementations of embodiments of this application. It should be understood that a redundancy system includes at least a storage device and a network edge device in a single-side data center.

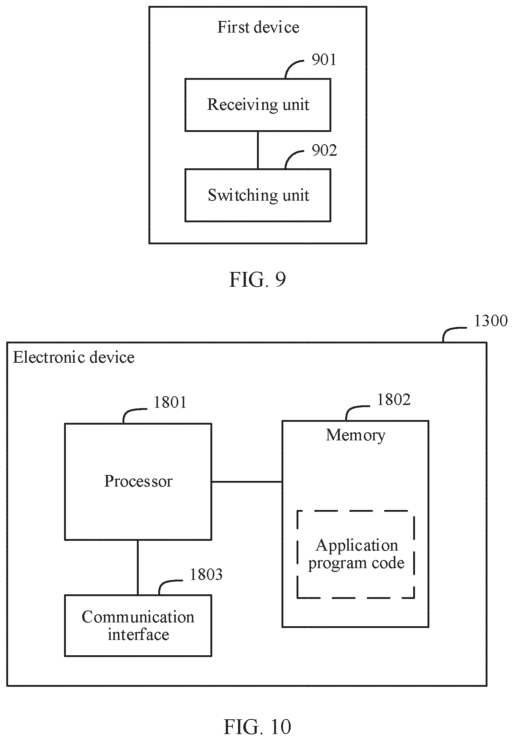

An embodiment of this application further provides a device. The device may be used as a first device, the first device and a second device perform transmission of a service packet via a first network, and the first network includes a network edge device connected to the first device. As shown in FIG. 9, the first device includes a receiving unit 901 and a switching unit 902. The receiving unit 901 is configured to receive a network exception packet from the network edge device, where the network exception packet indicates that a network status of the first network is abnormal. The switching unit 902 is configured to: in response to receiving the network exception packet, switch to transmitting a backup packet to the second device via a second network. The second network is a transmission network whose network status is normal between the first device and the second device, and the backup packet includes a backup packet corresponding to a service packet transmitted in the first network when the first network is abnormal.

Optionally, the first device and the second device are storage devices, and the first network is an optical transmission network.

In a possible implementation, the network edge device is configured to: in response to detecting that the network status of the first network is abnormal, send the network exception packet to the first device.

Optionally, in response to detecting that the network status of the first network is abnormal, sending the network exception packet to the first device includes: periodically performing detection on a preset indicator of the first network, to obtain a detection result corresponding to the preset indicator, where the preset indicator includes at least one of the following: port power, signal strength, a bit error rate, a delay, and a packet loss rate; and in response to detecting that the detection result corresponding to the preset indicator reaches a preset threshold, determining that the network status of the first network is abnormal, and sending the network exception packet to the first device.

In a possible implementation, a unique sequence number is added to each packet, the second device is configured to: check, based on the sequence number, whether the packet is valid, and store a valid packet, and the switching unit 902 includes: an exception response module, configured to: in response to receiving the network exception packet, suspend transmission of the service packet via the first network, and notify, via the second network, the second device that a sequence number of the service packet transmitted in the first network is invalid; and a packet sending module, configured to: add a valid sequence number to a backup packet, and send, to the second device via the second network, the backup packet to which the valid sequence number is added.

In a possible implementation, the first device further includes: an information determining unit, configured to: before transmission of the service packet is performed via the first network, determine network information corresponding to the first network, where the network information includes a device identifier of a device included in the first network. The network exception packet sent by the network edge device to the first device includes a first device identifier of the network edge device. In response to receiving the network exception packet, suspending transmission of the service packet via the first network includes: determining, based on the first device identifier in the network exception packet and the network information, the first network including the network edge device, and deleting, from a routing table of the first device, routing information corresponding to the first network that passes through the network edge device.

In a possible implementation, the second device is further configured to send a probe packet to the network edge device via the first network. The network edge device is further configured to: in response to receiving the probe packet, fill the first device identifier of the network edge device in the probe packet, and send a probe packet filled with the first device identifier to the first device. The information determining unit includes: a first recording module, configured to: in response to receiving the probe packet filled with the first device identifier, extract the first device identifier from the probe packet filled with the first device identifier, and record the extracted first device identifier in the network information.

In a possible implementation, when the first device and the network edge device are connected to a same network device, the information determining unit includes: a second recording module, configured to obtain a second device identifier of the network device, and record the second device identifier in the network information. The network exception packet sent by the network edge device to the first device includes the first device identifier of the network edge device and the second device identifier of the network device. In response to receiving the network exception packet, suspending transmission of the service packet via the first network includes: determining, based on the first device identifier and the second device identifier in the network exception packet and the network information, the first network that passes through the network edge device and the network device, and deleting, from the routing table of the first device, routing information corresponding to the first network that passes through the network edge device and the network device.

In a possible implementation, the first device further includes: a packet transmission unit, configured to: when the network status of the first network is normal, obtain a to-be-transmitted service packet, back up the to-be-transmitted service packet to obtain a backup packet, store the backup packet, add a sequence number to the to-be-transmitted service packet, and send, to the second device via the first network, a service packet to which the sequence number is added.

In a possible implementation, the network edge device is further configured to: predict, based on a historical network exception packet of the first network, a time point at which a network exception occurs in the first network in the future, where the historical network exception packet includes a network exception packet obtained through statistics collection when a network exception occurs in the first network within historical time; and send the network exception packet to the first device based on the time point.

In a possible implementation, the first device and the network edge device perform packet transmission via an internal network, a network status detection module is disposed in the internal network, and the network status detection module is configured to: perform detection on a network status of the internal network, and in response to detecting that the network status of the internal network is abnormal, send an internal network exception packet to the first device. The first device further includes: an internal network switching unit, configured to: in response to the internal network exception packet, switch to performing packet transmission with the network edge device via a backup internal network.

An embodiment of this application further provides a device. The device may be used as a first device, the first device and a second device perform transmission of a service packet via a first network, the first network includes a network edge device connected to the first device, the first device includes an interface and a processor, and the interface communicates with the processor. The processor is configured to: receive a network exception packet from the network edge device, where the network exception packet indicates that a network status of the first network is abnormal; and in response to receiving the network exception packet, switch to transmitting a backup packet to the second device via a second network. The second network is a transmission network whose network status is normal between the first device and the second device, and the backup packet includes a backup packet corresponding to a service packet transmitted in the first network when the first network is abnormal.

Optionally, the first device and the second device are storage devices, and the first network is an optical transmission network.

In a possible implementation, the network edge device is configured to: in response to detecting that the network status of the first network is abnormal, send the network exception packet to the first device.

Optionally, in response to detecting that the network status of the first network is abnormal, sending the network exception packet to the first device includes: periodically performing detection on a preset indicator of the first network, to obtain a detection result corresponding to the preset indicator, where the preset indicator includes at least one of the following: port power, signal strength, a bit error rate, a delay, and a packet loss rate; and in response to detecting that the detection result corresponding to the preset indicator reaches a preset threshold, determining that the network status of the first network is abnormal, and sending the network exception packet to the first device.

In a possible implementation, a unique sequence number is added to each packet, the second device is configured to: check, based on the sequence number, whether the packet is valid, and store a valid packet, and in response to receiving the network exception packet, switching to transmitting the backup packet to the second device via the second network includes: in response to receiving the network exception packet, suspending transmission of the service packet via the first network, and notifying, via the second network, the second device that a sequence number of the service packet transmitted in the first network is invalid; and adding a valid sequence number to a backup packet, and sending, to the second device via the second network, the backup packet to which the valid sequence number is added.

In a possible implementation, the processor is further configured to: before transmission of the service packet is performed via the first network, determine network information corresponding to the first network, where the network information includes a device identifier of a device included in the first network. The network exception packet sent by the network edge device to the first device includes a first device identifier of the network edge device. In response to receiving the network exception packet, suspending transmission of the service packet via the first network includes: determining, based on the first device identifier in the network exception packet and the network information, the first network including the network edge device, and deleting, from a routing table of the first device, routing information corresponding to the first network that passes through the network edge device.

In a possible implementation, the second device is further configured to send a probe packet to the network edge device via the first network. The network edge device is further configured to: in response to receiving the probe packet, fill the first device identifier of the network edge device in the probe packet, and send a probe packet filled with the first device identifier to the first device. Determining the network information corresponding to the first network includes: in response to receiving the probe packet filled with the first device identifier, extracting the first device identifier from the probe packet filled with the first device identifier, and recording the extracted first device identifier in the network information.

In a possible implementation, when the first device and the network edge device are connected to a same network device, determining the network information corresponding to the first network includes: obtaining a second device identifier of the network device, and recording the second device identifier in the network information. The network exception packet sent by the network edge device to the first device includes the first device identifier of the network edge device and the second device identifier of the network device. In response to receiving the network exception packet, suspending transmission of the service packet via the first network includes: determining, based on the first device identifier and the second device identifier in the network exception packet and the network information, the first network that passes through the network edge device and the network device, and deleting, from the routing table of the first device, routing information corresponding to the first network that passes through the network edge device and the network device.

In a possible implementation, the processor is further configured to: when the network status of the first network is normal, obtain a to-be-transmitted service packet, back up the to-be-transmitted service packet to obtain a backup packet, store the backup packet, add a sequence number to the to-be-transmitted service packet, and send, to the second device via the first network, a service packet to which the sequence number is added.

In a possible implementation, the network edge device is further configured to: predict, based on a historical network exception packet of the first network, a time point at which a network exception occurs in the first network in the future, where the historical network exception packet includes a network exception packet obtained through statistics collection when a network exception occurs in the first network within historical time; and send the network exception packet to the first device based on the time point.

In a possible implementation, the first device and the network edge device perform packet transmission via an internal network, a network status detection module is disposed in the internal network, and the network status detection module is configured to: perform detection on a network status of the internal network, and in response to detecting that the network status of the internal network is abnormal, send an internal network exception packet to the first device. The processor is further configured to: in response to the internal network exception packet, switch to performing packet transmission with the network edge device via a backup internal network.

An embodiment of this application provides a device management system. The device management system includes a first device and a network edge device. The first device is configured to perform an operation performed by the first device in the foregoing device management method. The network edge device is configured to perform an operation performed by the network edge device in the foregoing device management method. It should be understood that the device management system may be used in any data center (for example, the first data center in FIG. 2), and the foregoing redundancy system including two data centers may include the device management system.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product. The computer program product includes computer-readable code or a non-volatile computer-readable storage medium carrying the computer-readable code. When the computer-readable code is run in a processor of an electronic device, the processor of the electronic device performs the foregoing method.

FIG. 10 is a diagram of a structure of an electronic device 1300 according to an embodiment of this application. As shown in FIG. 10, the electronic device 1300 may be a first device or a network edge device, and performs functions that need to be performed by the first device or the network edge device in the foregoing device management method. The electronic device 1300 includes at least one processor 1801, at least one memory 1802, and at least one communication interface 1803. In addition, the electronic device may further include an antenna and other general-purpose components, and details are not described herein.

The following details the components of the electronic device 1300 with reference to FIG. 10.

The processor 1801 may be a general-purpose central processing unit (CPU), a microprocessor, an application-specific integrated circuit (application-specific integrated circuit, ASIC), or one or more integrated circuits configured to control execution of the foregoing solution program. The processor 1801 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The communication interface 1803 is configured to communicate with another electronic device or a communication network, for example, an Ethernet, a radio access network (RAN), a core network, or a wireless local area network (Wireless Local Area Network, WLAN).

The memory 1802 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM), other compact disc storage, optical disc storage (including a compact disc, a laser disc, an optical disc, a digital versatile disc, a Blu-ray disc, and the like), a magnetic disk storage medium, another magnetic storage device, or any other medium that can be for carrying or storing expected program code in a form of instructions or a data structure and that is accessible to a computer. However, this is not limited thereto. The memory may exist independently, and is connected to the processor through a bus. The memory may alternatively be integrated with the processor.

The memory 1802 is configured to store application program code for executing the foregoing solution, and the processor 1801 controls the execution. The processor 1801 is configured to execute the application program code stored in the memory 1802.

In the foregoing embodiments, descriptions of each embodiment have respective focuses. For a part that is not described in detail in an embodiment, refer to related descriptions in another embodiment.

The computer-readable storage medium may be a tangible device that can retain and store instructions used by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing devices. More specific examples (non-exhaustive list) of the computer-readable storage medium include: a portable computer disk, a hard disk, a random access memory (RAM), a read-only memory (ROM), an erasable programmable read-only memory (EPROM, or flash memory), a static random-access memory (Static Random Access Memory, SRAM), a portable compact disk read-only memory (Compact Disc Read-Only Memory, CD-ROM), a digital video disk (Digital Video Disc, DVD), a memory stick, a floppy disk, a mechanical coding device, for example, a punching card or a groove protrusion structure that stores instructions, and any suitable combination thereof.

The computer-readable program instructions or code described herein may be downloaded to computing/processing devices from the computer-readable storage medium, or downloaded to an external computer or an external storage device by using a network, such as the internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions for performing the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include object-oriented programming languages such as Smalltalk and C++, and a conventional procedural programming language like a "C" language or a similar programming language. The computer-readable program instructions may be executed fully on a user computer, partly on the user computer, as a stand-alone software package, partly on the user computer and partly on a remote computer, or fully on the remote computer or a server. In a case related to the remote computer, the remote computer may be connected to the user computer via any type of network, including a local area network (Local Area Network, LAN) or a wide area network (Wide Area Network, WAN), or may be connected to an external computer (for example, via the internet by using an internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks of the flowcharts and/or block diagrams may be implemented by using the computer-readable program instructions.

These computer-readable program instructions may be provided to a processor of a general-purpose computer, a dedicated computer, or another programmable data processing apparatus to produce a machine, so that these instructions, when executed by the processor of the computer or the another programmable data processing apparatus, create an apparatus for implementing functions/actions specified in one or more blocks of the flowcharts and/or block diagrams. Alternatively, these computer-readable program instructions may be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/actions specified in the one or more blocks of the flowcharts and/or block diagrams.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks of the flowcharts and/or block diagrams.

The flowcharts and block diagrams in the accompanying drawings show possible implementations of system architectures, functions, and operations of the apparatus, the system, the method, and the computer program product according to a plurality of embodiments of this application. In this regard, each block of the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order. This depends on a related function.

It should also be noted that each block of the block diagrams and/or flowcharts, and a combination of blocks of the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described herein with reference to embodiments, in a process of implementing the present invention claimed for protection, a person skilled in the art can understand and implement other variations of the disclosed embodiments by viewing the accompanying drawings, the disclosed content, and the appended claims. In the claims, "comprising" (comprising) does not exclude another component or step, and "a" or "one" does not exclude a case of "a plurality of". A single processor or another unit can implement several functions enumerated in the claims. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Without departing from the scope of the described embodiments, many modifications and variations are apparent to a person of ordinary skill in the art. Selection of terms used in this specification is intended to best describe principles of embodiments, actual applications, or improvements to technologies in the market, or to enable another person of ordinary skill in the art to understand embodiments disclosed in this specification.

## Claims

1. A device management method, wherein a first device and a second device perform transmission of a service packet via a first network, the first network comprises a network edge device connected to the first device, and the method comprises:
receiving, by the first device, a network exception packet from the network edge device, wherein the network exception packet indicates that a network status of the first network is abnormal; and
in response to receiving the network exception packet, switching, by the first device, to transmitting a backup packet to the second device via a second network, wherein the second network is a transmission network whose network status is normal between the first device and the second device, and the backup packet comprises a backup packet corresponding to a service packet transmitted in the first network when the first network is abnormal.

2. The method according to claim 1, wherein the method further comprises:
in response to detecting that the network status of the first network is abnormal, sending, by the network edge device, the network exception packet to the first device.

3. The method according to claim 2, wherein the in response to detecting that the network status of the first network is abnormal, sending the network exception packet to the first device comprises:
periodically performing, by the network edge device, detection on a preset indicator of the first network, to obtain a detection result corresponding to the preset indicator, wherein the preset indicator comprises at least one of the following: port power, signal strength, a bit error rate, a delay, or a packet loss rate; and
in response to detecting that the detection result corresponding to the preset indicator reaches a preset threshold, determining, by the network edge device, that the network status of the first network is abnormal, and sending the network exception packet to the first device.

4. The method according to claim 1, wherein a unique sequence number is added to each packet, the second device is configured to: check, based on the sequence number, whether the packet is valid, and store a valid packet, and the in response to receiving the network exception packet, switching to transmitting a backup packet to the second device via a second network comprises:
in response to receiving the network exception packet, suspending, by the first device, transmission of the service packet via the first network, and notifying, via the second network, the second device that a sequence number of the service packet transmitted in the first network is invalid; and
adding, by the first device, a valid sequence number to the backup packet, and sending, to the second device via the second network, a backup packet to which the valid sequence number is added.

5. The method according to claim 4, wherein before transmission of the service packet is performed via the first network, the method further comprises:
determining, by the first device, network information corresponding to the first network, wherein the network information comprises a device identifier of a device comprised in the first network, wherein
the network exception packet sent by the network edge device to the first device comprises a first device identifier of the network edge device, and the in response to receiving the network exception packet, suspending transmission of the service packet via the first network comprises:
determining, by the first device based on the first device identifier in the network exception packet and the network information, the first network comprising the network edge device, and deleting, from a routing table of the first device, routing information corresponding to that passes through the network edge device.

6. The method according to claim 5, wherein the second device is further configured to send a probe packet to the network edge device via the first network, and the method further comprises:
in response to receiving the probe packet, filling, by the network edge device, the first device identifier of the network edge device in the probe packet, and sending a probe packet filled with the first device identifier to the first device; and
the determining network information corresponding to the first network comprises:
in response to receiving the probe packet filled with the first device identifier, extracting, by the first device, the first device identifier from the probe packet filled with the first device identifier, and recording the extracted first device identifier in the network information.

7. The method according to claim 5 or 6, wherein when the first device and the network edge device are connected to a same network device, the determining network information corresponding to the first network comprises:
obtaining, by the first device, a second device identifier of the network device, and recording the second device identifier in the network information, wherein
the network exception packet sent by the network edge device to the first device comprises the first device identifier of the network edge device and the second device identifier of the network device, and the in response to receiving the network exception packet, suspending transmission of the service packet via the first network comprises:
determining, by the first device based on the first device identifier and the second device identifier in the network exception packet and the network information, the first network that passes through the network edge device and the network device, and deleting, from the routing table of the first device, routing information corresponding to the first network that passes through the network edge device and the network device.

8. The method according to any one of claims 1 to 7, wherein when the network status of the first network is normal, a process of transmission of the service packet between the first device and the second device comprises:
obtaining, by the first device, a to-be-transmitted service packet, backing up the to-be-transmitted service packet to obtain a backup packet, storing the backup packet, adding a sequence number to the to-be-transmitted service packet, and sending, to the second device via the first network, a service packet to which the sequence number is added.

9. The method according to any one of claims 1 to 7, wherein the method further comprises:
predicting, by the network edge device based on a historical network exception packet of the first network, a time point at which a network exception occurs in the first network in the future, wherein the historical network exception packet comprises a network exception packet obtained through statistics collection when a network exception occurs in the first network within historical time; and
sending, by the network edge device, the network exception packet to the first device based on the time point.

10. The method according to any one of claims 1 to 7, wherein the first device and the network edge device perform packet transmission via an internal network, a network status detection module is disposed in the internal network, the network status detection module is configured to perform detection on a network status of the internal network, and the method further comprises:
in response to detecting that the network status of the internal network is abnormal, sending, by the network status detection module, an internal network exception packet to the first device; and
in response to the internal network exception packet, switching, by the first device, to performing packet transmission with the network edge device via a backup internal network.

11. The method according to claim 1, wherein the first device and the second device are storage devices.

12. The method according to claim 1, wherein the first network is an optical transmission network.

13. A device, wherein the device is used as a first device, the first device and a second device perform transmission of a service packet via a first network, the first network comprises a network edge device connected to the first device, and the first device comprises a receiving unit and a switching unit, wherein
the receiving unit is configured to receive a network exception packet from the network edge device, wherein the network exception packet indicates that a network status of the first network is abnormal; and
the switching unit is configured to: in response to receiving the network exception packet, switch to transmitting a backup packet to the second device via a second network, wherein the second network is a transmission network whose network status is normal between the first device and the second device, and the backup packet comprises a backup packet corresponding to a service packet transmitted in the first network when the first network is abnormal.

14. The device according to claim 13, wherein the network edge device is configured to: in response to detecting that the network status of the first network is abnormal, send the network exception packet to the first device.

15. The device according to claim 14, wherein in response to detecting that the network status of the first network is abnormal, sending the network exception packet to the first device comprises:
periodically performing detection on a preset indicator of the first network, to obtain a detection result corresponding to the preset indicator, wherein the preset indicator comprises at least one of the following: port power, signal strength, a bit error rate, a delay, and a packet loss rate; and
in response to detecting that the detection result corresponding to the preset indicator reaches a preset threshold, determining that the network status of the first network is abnormal, and sending the network exception packet to the first device.

16. The device according to claim 13, wherein a unique sequence number is added to each packet, the second device is configured to: check, based on the sequence number, whether the packet is valid, and store a valid packet, and the switching unit comprises:
an exception response module, configured to: in response to receiving the network exception packet, suspend transmission of the service packet via the first network, and notify, via the second network, the second device that a sequence number of the service packet transmitted in the first network is invalid; and
a packet sending module, configured to: add a valid sequence number to the backup packet, and send, to the second device via the second network, the backup packet to which the valid sequence number is added.

17. The device according to claim 16, wherein the first device further comprises:
an information determining unit, configured to: before transmission of the service packet is performed via the first network, determine network information corresponding to the first network, wherein the network information comprises a device identifier of a device comprised in the first network, wherein
the network exception packet sent by the network edge device to the first device comprises a first device identifier of the network edge device, and in response to receiving the network exception packet, suspending transmission of the service packet via the first network comprises:
determining, by the first device based on the first device identifier in the network exception packet and the network information, the first network comprising the network edge device, and deleting, from a routing table of the first device, routing information corresponding to the first network that passes through the network edge device.

18. The device according to claim 17, wherein the second device is further configured to send a probe packet to the network edge device via the first network, and the network edge device is further configured to: in response to receiving the probe packet, fill the first device identifier of the network edge device in the probe packet, and send a probe packet filled with the first device identifier to the first device; and
the information determining unit comprises: a first recording module, configured to: in response to receiving the probe packet filled with the first device identifier, extract the first device identifier from the probe packet filled with the first device identifier, and record the extracted first device identifier in the network information.

19. The device according to claim 17 or 18, wherein when the first device and the network edge device are connected to a same network device, the information determining unit comprises: a second recording module, configured to obtain a second device identifier of the network device, and record the second device identifier in the network information, wherein
the network exception packet sent by the network edge device to the first device comprises the first device identifier of the network edge device and the second device identifier of the network device, and in response to receiving the network exception packet, suspending transmission of the service packet via the first network comprises:
determining, by the first device based on the first device identifier and the second device identifier in the network exception packet and the network information, the first network that passes through the network edge device and the network device, and deleting, from the routing table of the first device, routing information corresponding to the first network that passes through the network edge device and the network device.

20. The device according to any one of claims 13 to 19, wherein the first device further comprises:
a packet transmission unit, configured to: when the network status of the first network is normal, obtain a to-be-transmitted service packet, back up the to-be-transmitted service packet to obtain a backup packet, store the backup packet, add a sequence number to the to-be-transmitted service packet, and send, to the second device via the first network, a service packet to which the sequence number is added.

21. The device according to any one of claims 13 to 19, wherein the network edge device is further configured to:
predict, based on a historical network exception packet of the first network, a time point at which a network exception occurs in the first network in the future, wherein the historical network exception packet comprises a network exception packet obtained through statistics collection when a network exception occurs in the first network within historical time; and send the network exception packet to the first device based on the time point.

22. The device according to any one of claims 13 to 19, wherein the first device and the network edge device perform packet transmission via an internal network, a network status detection module is disposed in the internal network, and the network status detection module is configured to: perform detection on a network status of the internal network, and in response to detecting that the network status of the internal network is abnormal, send an internal network exception packet to the first device; and
the first device further comprises: an internal network switching unit, configured to: in response to the internal network exception packet, switch to performing packet transmission with the network edge device via a backup internal network.

23. The device according to claim 13, wherein the first device and the second device are storage devices.

24. The device according to claim 13, wherein the first network is an optical transmission network.

25. A device, wherein the device is used as a first device, the first device and a second device perform transmission of a service packet via a first network, the first network comprises a network edge device connected to the first device, the first device comprises an interface and a processor, and the interface communicates with the processor, wherein
the processor is configured to:
receive a network exception packet from the network edge device, wherein the network exception packet indicates that a network status of the first network is abnormal; and
in response to receiving the network exception packet, switch to transmitting a backup packet to the second device via a second network, wherein the second network is a transmission network whose network status is normal between the first device and the second device, and the backup packet comprises a backup packet corresponding to a service packet transmitted in the first network when the first network is abnormal.

26. The device according to claim 25, wherein the network edge device is configured to: in response to detecting that the network status of the first network is abnormal, send the network exception packet to the first device.

27. The device according to claim 26, wherein in response to detecting that the network status of the first network is abnormal, sending the network exception packet to the first device comprises:
periodically performing detection on a preset indicator of the first network, to obtain a detection result corresponding to the preset indicator, wherein the preset indicator comprises at least one of the following: port power, signal strength, a bit error rate, a delay, and a packet loss rate; and
in response to detecting that the detection result corresponding to the preset indicator reaches a preset threshold, determining that the network status of the first network is abnormal, and sending the network exception packet to the first device.

28. The device according to claim 25, wherein a unique sequence number is added to each packet, the second device is configured to: check, based on the sequence number, whether the packet is valid, and store a valid packet, and in response to receiving the network exception packet, switching to transmitting the backup packet to the second device via the second network comprises:
in response to receiving the network exception packet, suspending transmission of the service packet via the first network, and notifying, via the second network, the second device that a sequence number of the service packet transmitted in the first network is invalid; and
adding a valid sequence number to the backup packet, and sending, to the second device via the second network, the backup packet to which the valid sequence number is added.

29. The device according to claim 28, wherein the processor is further configured to:
before transmission of the service packet is performed via the first network, determine network information corresponding to the first network, wherein the network information comprises a device identifier of a device comprised in the first network, wherein
the network exception packet sent by the network edge device to the first device comprises a first device identifier of the network edge device, and in response to receiving the network exception packet, suspending transmission of the service packet via the first network comprises:
determining, based on the first device identifier in the network exception packet and the network information, the first network comprising the network edge device, and deleting, from a routing table of the first device, routing information corresponding to the first network that passes through the network edge device.

30. The device according to claim 29, wherein the second device is further configured to send a probe packet to the network edge device via the first network, and the network edge device is further configured to: in response to receiving the probe packet, fill the first device identifier of the network edge device in the probe packet, and send a probe packet filled with the first device identifier to the first device; and
determining the network information corresponding to the first network comprises:
in response to receiving the probe packet filled with the first device identifier, extracting the first device identifier from the probe packet filled with the first device identifier, and recording the extracted first device identifier in the network information.

31. The device according to claim 29 or 30, wherein when the first device and the network edge device are connected to a same network device, determining the network information corresponding to the first network comprises:
obtaining a second device identifier of the network device, and recording the second device identifier in the network information, wherein
the network exception packet sent by the network edge device to the first device comprises the first device identifier of the network edge device and the second device identifier of the network device, and in response to receiving the network exception packet, suspending transmission of the service packet via the first network comprises:
determining, based on the first device identifier and the second device identifier in the network exception packet and the network information, the first network that passes through the network edge device and the network device, and deleting, from the routing table of the first device, routing information corresponding to the first network that passes through the network edge device and the network device.

32. The device according to any one of claims 25 to 31, wherein the processor is further configured to:
when the network status of the first network is normal, obtain a to-be-transmitted service packet, back up the to-be-transmitted service packet to obtain a backup packet, store the backup packet, add a sequence number to the to-be-transmitted service packet, and send, to the second device via the first network, a service packet to which the sequence number is added.

33. The device according to any one of claims 25 to 31, wherein the network edge device is further configured to:
predict, based on a historical network exception packet of the first network, a time point at which a network exception occurs in the first network in the future, wherein the historical network exception packet comprises a network exception packet obtained through statistics collection when a network exception occurs in the first network within historical time; and send the network exception packet to the first device based on the time point.

34. The device according to any one of claims 25 to 31, wherein the first device and the network edge device perform packet transmission via an internal network, a network status detection module is disposed in the internal network, and the network status detection module is configured to: perform detection on a network status of the internal network, and in response to detecting that the network status of the internal network is abnormal, send an internal network exception packet to the first device; and
the processor is further configured to: in response to the internal network exception packet, switch to performing packet transmission with the network edge device via a backup internal network.

35. The device according to claim 25, wherein the first device and the second device are storage devices.

36. The device according to claim 25, wherein the first network is an optical transmission network.

37. A device management system, comprising a first device and a network edge device, wherein the first device is configured to perform an operation performed by the first device in the method according to any one of claims 1 to 10, and the network edge device is configured to perform an operation performed by the network edge device in the method according to any one of claims 1 to 10.

38. A non-volatile computer-readable storage medium, wherein the non-volatile computer-readable storage medium stores computer program instructions, and when the computer program instructions are executed by a processor, the method according to any one of claims 1 to 10 is implemented.

39. A computer program product, comprising computer-readable code or a non-volatile computer-readable storage medium carrying the computer-readable code, wherein when the computer-readable code is run in an electronic device, a processor of the electronic device performs the method according to any one of claims 1 to 10.
